Europäisches Patentamt

European Patent Office

Office européen des brevets

(11) Publication number: **0 432 369 A1**

## EUROPEAN PATENT APPLICATION

(21) Application number: **90116539.9**

(22) Date of filing: **29.08.90**

(51) Int. Cl.⁵ **C08J 11/16, C08J 11.08,
//C08L75:04**

(30) Priority: **28.10.89 DE 3936063**

(43) Date of publication of application:
**19.06.91 Bulletin 91/25**

(84) Designated Contracting States:
**DE FR GB IT NL**

(71) Applicant: **GENERAL ELECTRIC COMPANY
1 River Road
Schenectady New York 10022(US)**

(72) Inventor: **Stricker, Urban, General Electric
Plastics B.V.
Südstern 2
W-1000 Berlin 61(DE)**

(74) Representative: **Schüler, Horst, Dr. et al
General Electric Praunheimer Landstrasse
50
W-6000 Frankfurt 90(DE)**

(54) Method of separating polyurethane foams and/or polyurethane adhesives from composite structurel parts.

(57) The invention relates to a method of separating polyurethane foams and/or polyurethane adhesives from composite structural parts which result from the scrapping of vehicles, aeroplanes and the like in large quantities.

The composite structural parts, optionally after reduction in size, are subjected to an oxidation treatment as a result of which the polyurethane foam is converted into a non-tacky powdered condition, while the composite component remains substantially uninfluenced and is obtained in a pure form so that it may be used again.

Aqueous potassium permanganate solution to which reaction-accelerating additions are added is preferably used as an oxidant.

# METHOD OF SEPARATING POLYURETHANE FOAMS AND/OR POLYURETHANE ADHESIVES FROM COMPOSITE STRUCTURAL PARTS.

Polyurethane foams and polyurethane adhesives in the form of composite structural parts are increasingly used as modern building and structural materials, for example, in motorcar and aircraft constructions, as well as in the manufacture of domestic appliances, and the like.

The waste materials resulting from these constructions and also the materials resulting from scrapping present problems in that a separation of these composite structural materials which as a rule are very bulky into the individual component parts has so far not been possible in an economic manner and the elimination can hence only be achieved by combustion of the total composite material.

The exhaust gases with the toxic materials contained therein, however, formed during such a combustion constitute a serious threat to environmental pollution, so that combustion is not to be considered as a solution to the problem.

Moreover, the polyurethane foam in such composite components is often combined with high-grade thermoplastic synthetic resins, for example, polycarbonate, which as such would be suitable for reuse as a thermoplast, provided they could be used separately from the polyurethane foam and in a pure form.

The methods used so far for the separation of such composite materials are of a physical-mechanical nature and are based on high-pressure-cleaning, on the size-reduction of the whole composite and on the subsequent flotation separation, the air-sifting and, in the case in which ferromagnetic materials are contained in the composite, on the magnetic separation. However, these methods have proved to be unsatisfactory and in no way ensure recycling of the thermoplastic components of the composites because with this mechanical method a part of the polycarbonate foam remains adhering to the thermoplastic synthetic resin.

Starting from this prior art it is the object of the present invention to provide a simple method which can easily be performed and with which polyurethane foams or polyurethane adhesives can be removed from composite materials in a simple manner so that the thermoplasts contained in the composite material can be obtained in a substantially pure form so as to be used again as a thermoplastic material.

According to the invention this object is achieved by means of a new method of separating polyurethane foams and polyurethane adhesives from composite structural parts, which method is characterised in that the composite structural parts, optionally in a size-reduced form are subjected to a chemical oxidation with an oxidant.

In this chemical reaction the up till now elastic and adhesive polyurethane is converted into a non-tacky powdered condition in which it can easily be removed from the composite component.

Since the quantity of the oxidant required for the oxidation depends on the quantity of the polyurethane to be oxidised, it is advantageous to remove a part of the polyurethane foam before the oxidation treatment by means of known methods, so that only the foam parts bonding rigidly to the other components of the composite material are then subjected to the oxidation and hence the consumption of oxidant is considerably reduced.

The reduction in size of the composite material preferably carried out before the oxidation treatment, is preferably carried out in a shredder, in which a lumpy material results which has a diameter of approximately 0.5 to 3 cm. The oxidation treatment itself is then preferably carried out in a container while stirring or even better in a rotating container, in which the parts of the material constantly rub against each other and so remove the polyurethane converted into the non-tacky condition as a powder from the thermoplastic synthetic resin component.

It has proved to be particularly advantageous when an aqueous solution of potassium permanganate is used as an oxidant. Such an oxidant does not influence the thermoplasts present in the composite material, for example, polycarbonate, or influences them only to a negligible extent.

Composite materials from metal parts and foams, for examples foamed sheet-metal parts, can also be formed with this oxidant, since the metal parts or sheet-metal parts are not attacked.

The manganese oxide formed from the potassium permanganate during the oxidation reaction precipitates from the solution and is separated together with the powdered oxidation product of the polyurethane.

It has been found surprisingly that the rate of oxidation of the polyurethane can be substantially increased with potassium permanganate, when a small quantity of lye, preferably in the form of potassium hydroxide, is added to the solution.

A further acceleration of the oxidation method is achieved surprisingly by the addition of Cu-II salts and/or Sn-II salts.

These salts which are added to the reaction solution in a very small quantity for example 10 g per 10 l, apparently have a catalytic activity on the oxidation reaction.

Further factors to accelerate the oxidation reaction are first of all the concentration of the potassium permangate solution used furthermore the reaction temperature, and in particular also the movement of the synthetic resin composite particles floating in the reaction solution.

The concentration of the potassium permanganate solution used for the oxidation is preferably 40 g/l and a reaction temperature of approximately 50 to 75° C has been found to be particularly suitable.

On the basis of the recognitions gained during the examinations, a method in which the size-reduced composite structural components are treated in one or more revolving cylindrical containers with potassium permanganate solution, advantageously in counter current, has been found to be very advantageous.

As a result of the constantly rotating container and fins or baffle plates optionally provided therein, the synthetic resin parts floating in the potassium permanganate solution abrade each other and the oxidised polyurethane foam is rubbed off so that not yet converted polyurethane foam is constantly contacted with the potassium permanganate solution.

The mixture treated in the revolving cylindrical container is advantageously separated by classifying, i.e. the synthetic resin parts are separated from the solution and from the fine-granular resulting oxidation product of the polyurethane foam and from the precipitated manganese dioxide, and are optionally treated with fresh potassium permanganate solution in one or more further revolving cylindrical container(s).

In this manner a substantially complete removal of the polyurethane foam from the thermoplastic synthetic resin parts is obtained after a comparatively short treatment time.

The method may be carried out batch-wise, or it may be performed as a continuous process when a revolving cylindrical container of suitable length is used.

It has been found to be particularly advantageous when steel balls are added to the synthetic resin composite material present in the revolving cylindrical container, which balls, in a manner similar to a bail mill, influence the oxidised polyurethane by their weight during the rotation and thus produce a crumbling effect.

The thermoplastic synthetic resin obtained according to the method of the invention is advantageously subjected to a drying process, because the long-lasting influence of moisture may in certain thermoplasts, for example, polycarbonate, lead to a splitting of the polymer and hence to a decrease of the extent of polymerisation. Drying methods conventionally used in the chemical industry may be used for drying.

The dried thermoplastic material obtained in this manner may be further reused as a starting material in conventional methods for the processing of synthetic resins.

The invention will now be described in greater detail with reference to the ensuing specific examples.

EXAMPLE 1

A bumper of polycarbonate with polyurethane foam backing obtained upon scrapping motor-cars was first liberated mechanically from the greater part of the polyurethane foam and then size-reduced in a shredder together with the remaining adhering polyurethane foam.

The resulting lumpy material which had a diameter of 0.5 to 3 cm was provided in a container comprising a stirrer and a 4% potassium permanganate solution which had been adjusted at a pH value of 8 by means of 1n-potassium hydroxide solution, was added.

The oxidation reaction was then carried out at a temperature of approximately 50° C for 8 hours while stirring. At the end of the reaction the violet colour of the solution demonstrated that unused potassium permanganate was still present. The non-attacked thermoplastic material was then separated from the solution, from the polyurethane oxidation product and from the precipitated manganese dioxide by classifying washed with running water and dried. It proved to be free from polyurethane foam and could be processed without any difficulties to articles having excellent physical properties by means of conventional processes.

EXAMPLE 2

The method described in example 1 was repeated with the proviso that 10 g of copper-II-sulphate (Cu + SO₄) per 10 l of solution were added to the 4% potassium permanganate solution adjusted at pH 8. The oxidation reaction was then carried out at 50° C for 2 hours. After this reaction time it was found that a sample taken was free from polyurethane foam and that the polycarbonate obtained in this manner could be formed to excellent articles without any difficulties.

EXAMPLE 3

The method described in example 1 was repeated with the proviso that 10 g of tin sulphate (SnSO₄) permanganate 10 l of solution were added to the potassium permanganate solution adjusted at pH 8. After an oxidation time of 2 hours the polycarbonate was free from polyurethane foam and after washing and drying, could be formed again to excellent articles.

## Claims

1. A method of separating polyurethane foams and/or polyurethane adhesives from composite structural parts, characterised in that the composite structural parts, optionally in size-reduced form, are subjected to a chemical oxidation with an oxidant.

2. A method as claimed in Claim 1, characterised in that a part of the polyurethane foam in the c?mposite part is removed by means of a mechanical method before the oxidation method according to the invention is carried out.

3. A method as claimed in Claim 1 or 2, characterised in that an aqueous solution of potassium permanganate is used as an oxidant.

4. A method as claimed in Claim 3, characterised in that a small quantity of lye is added to the potassium permanganate solution used as an oxidant to accelerate the oxidation reaction.

5. A method as claimed in Claim 3 or 4, characterised in that Cu-II salts or Sn-II salts are added to the potassium permanganate solution to accelerate the oxidation reaction.

6. A method as claimed in any of the Claims 1 to 5, characterised in that the oxidation reaction is carried out at an elevated temperature.

7. A method as claimed in Claim 6, characterised in that the oxidation reaction is carried out at a temperature in the range from 50 to 75° C.

8. A method as claimed in any of the Claims 1-7, characterised in that the size-reduced composite structural parts are treated with an aqueous potassium permanganate solution in one or more revolving cylindrical containers.

9. A method as claimed in Claim 8, characterised in that the synthetic resin parts of the treated mixture emanating from the revolving cylindrical container are separated from the solution and from the fine-granular oxidation product, as well as from the precipitated manganese dioxide, by classifying and are optionally treated in one or several subsequent treatment steps with fresh potassium permanganate solution.

10 A method as claimed in Claim 8 or 9, characterised in that the treatment of the size-reduced composite structural parts with the potassium permanganate solution is carried out in counter current.

11. A method as claimed in any of the Claims 8 to 10, characterised in that steel balls are added to the oxidation mixture in the revolving cylindrical container so as to crumble the oxidised polyurethane foam.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | DE-A-2 030 857   (TEXAS INSTRUMENTS INC.)<br>* Claims 1-2 *<br>- - - | 1 | C<br>08 J 11 16<br>C 08 J 11 08<br>C 08 L 75:04 |
| Y | | 1,3,4 | |
| Y | US-A-3 679 591   (G. CARRILLO)<br>* Claims 1,4; examples III-VI; column 3, lines 42-57 *<br>- - - | 1,3,4 | |
| A | US-A-3 405 216   (W.L. GARRETT et al.)<br>* Claim 1; column 2, lines 13-42 *<br>- - - | 1,3,4,6,7 | |
| A | US-A-4 629 780   (J.D. SCHOENHARD)<br>* Claim 1 *<br>- - - | 1,6,7 | |
| A | DATABASE WPIL, accession no. 89-203004 [28], Derwent Publications Ltd, London, GB;<br>& JP-A-1 141 735 (CENTRAL GLASS K.K.) 02-06-1989<br>* Abstract *<br>- - - - - | 1 | |

TECHNICAL FIELDS SEARCHED (Int. Cl.5)

C 08 J

The present search report has been drawn up for all claims

| Place of search | Date of completion of search | Examiner |
|---|---|---|
| The Hague | 04 March 91 | HALLEMEESCH A.D. |